# EUROPEAN PATENT APPLICATION

(11) **EP 4 822 579 A1**
(43) Date of publication of application: **14.10.2026**
(21) Application number: 25199833.2
(22) Date of filing: 03.09.2025
(51) Int. Cl.: G06F 30/17, G06F 30/23

(54) **DEVICE FOR TOPOLOGY OPTIMIZATION OF BATTERY COOLING PLATE, METHOD THEREFOR AND RECORDING MEDIUM**

(30) Priority: 08.04.2025 KR 20250045239
(71) Applicant: AJOU UNIVERSITY INDUSTRY-ACADEMIC COOPERATION FOUNDATION, Gyeonggi-do 16499 (KR)
(72) Inventor: LEE, Chang Woo, 16507 Suwon-si, Gyeonggi-do (KR)
(74) Representative: Jung, Minkyu

(57) **Abstract**

The present disclosure relates to a device, method, and recording medium for topology optimization of a battery cooling plate, specifically for optimizing a cooling passage that cools a battery. The topology optimization device includes a heating value calculation processor configured to calculate a heating value of the battery based on the state of charge (SOC), a finite element analysis processor configured to divide a design area of the battery cooling plate into a plurality of finite elements, assign design variables to the finite elements, and perform finite element analysis based on the heating value and design variables to obtain analysis information, and a topology optimization design processor configured to derive optimal design variables by considering hydraulic loss and thermal compliance, and to design a topology-optimized cooling passage based on the derived optimal design variables.

## Description

### CROSS REFERENCE TO RELATED APPLICATIONS

This application claims priority to Korean Patent Application No. 10-2025-0045239, filed on April 8, 2025, in the Korean Intellectual Property Office, which is incorporated by reference herein in its entirety.

### FIELD OF THE INVENTION

The present disclosure relates to a technology for designing a battery cooling plate, and more particularly, to a device for designing topology optimization of a battery cooling plate, particularly for optimizing the cooling passage formed therein, a method therefor, and a recording medium.

### BACKGROUND OF THE RELATED ART

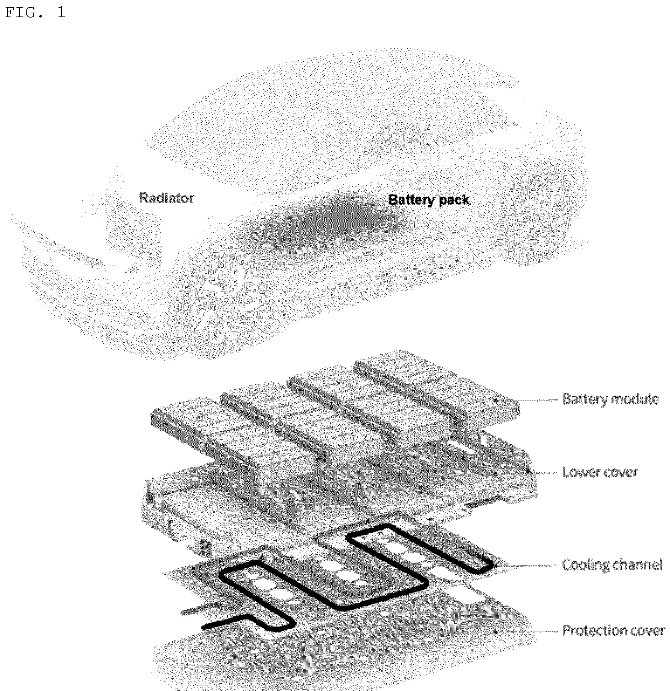

Various cooling methods are applied to lithium-ion batteries for electric vehicles to effectively manage heat generated during the charging and discharging process, and are typically divided into direct refrigerant cooling methods, air cooling methods, and water cooling methods. The direct refrigerant cooling method provides excellent cooling performance, but there is a safety problem in a high-voltage environment, and the air cooling method has a simple structure but has a limitation in low cooling performance. The water cooling type has excellent balance in terms of cooling performance, structural stability, modularity, and mass production, and is currently adopted in most electric vehicle platforms, and as shown in FIG. 1, a method of forming a cooling plate at the bottom of a battery to allow cooling water to flow is representative. At this time, even when the same pump output is used, a large difference in hydraulic pressure loss and cooling performance arise depending on the shape of the cooling water channel, so the optimal design of the cooling water channel structure is very important.

The conventional battery cooling plate designs have relied on engineers' intuition to predetermine structural information such as the position, number, thickness, and curvature of cooling water channels and partitions. This method offers limited design freedom, is difficult to reflect the nonlinear flow of the fluid, and makes it difficult to simultaneously consider various design constraints such as volume, weight, manufacturability, and unit price. In addition, there is a problem that it takes a lot of time and cost because structural information necessary for design must be defined in advance.

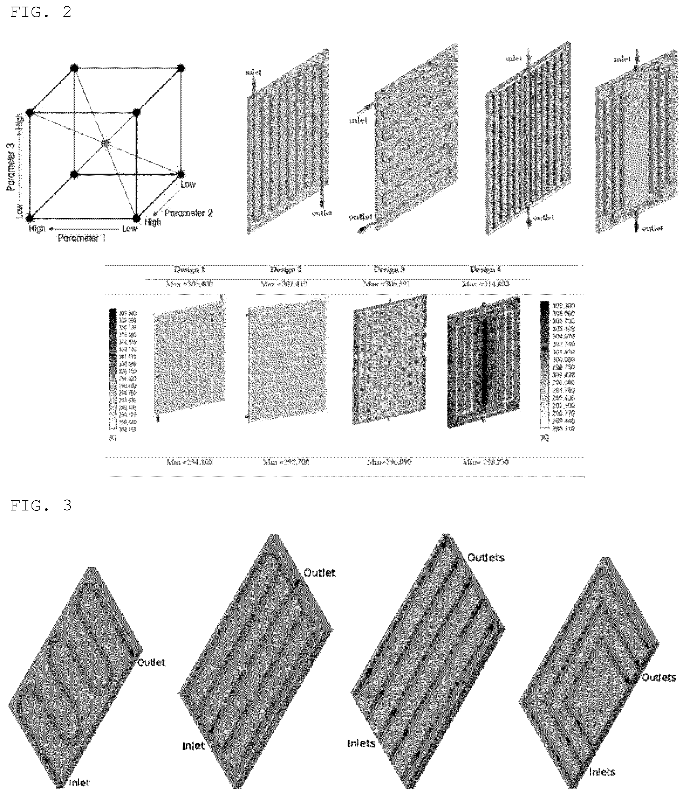

As an example of the existing battery cooling plate design technique, Design of Experiment(DOE) technique involves selecting several representative parameters and setting various levels within the range of each parameter to experimentally derive optimal conditions, as shown in FIG. 2. While this method is simple to apply, it requires predefined input of structural information, and it is difficult to reflect the coupling effect or nonlinearity between parameters as the number of parameters increases, making it unsuitable for a complex thermal fluid problem. As a result, it has a fundamental limitation in deriving an optimal design plan that satisfies multiple design constraints.

As another example of a conventional battery cooling plate design technique is the Size and Shape Optimization technique, which is a method of achieving target performance by using an optimization algorithm based on some design variables selected by an engineer. In this method, some structural elements such as a channel thickness and a curvature may be optimized, but as shown in FIG. 3, an initial shape must be defined in advance, and main structural information such as a location or number of cooling water channels may not be optimized. In particular, it is difficult to reflect the nonlinear flow of the fluid, limiting its ability to achieve overall cooling performance optimization.

As described above, although structural information such as the position, number, thickness, curvature, etc. of the cooling water channel and the partition wall are factors that directly affect hydraulic loss and cooling performance, conventional methods have relied on engineers' intuition to predetermine these factors. To overcome such limitations, there is a need for a battery cooling plate design technology capable of minimizing hydraulic pressure loss and maximizing cooling performance while satisfying a plurality of design constraints without requiring predefined structural information.

(Patent Document 1) Korean Patent Publication No. 10-2562437 (2023.08.02)

### SUMMARY OF THE INVENTION

The present disclosure has been made to address the above problems, and an object of the present disclosure is to provide a topology optimization device for a battery cooling plate for designing a topology optimized design of cooling passage of the battery cooling plate that cools the battery, a method therefor, and a recording medium.

The objects of the present disclosure are not limited to the objects mentioned above, and other objects not mentioned will be clearly understood by those skilled in the art from the following description.

To achieve the objective, a device for topology optimization for a battery cooling plate according to an embodiment of the present disclosure, which is for topology optimization of cooling passage of the battery cooling plate that cools the battery, includes: a heating value calculation processor configured to calculate a heating value of the battery based on a State of Charge (SOC) of the battery; a finite element analysis processor configured to divide a design area of the battery cooling plate into a plurality of finite elements, allocate design variables to the divided finite elements, and perform finite element analysis based on the heating value and the design variables to obtain finite element analysis information of the finite elements; and a topology optimization design processor configured to derive optimal design variables for the design variables by considering a hydraulic loss of the cooling passage and/or a thermal compliance of the battery cooling plate based on the obtained finite element analysis information, and to design a topology optimized structure of the cooling passage according to the derived optimal design variables.

The heating value calculation processor may calculate each of a reversible loss, an irreversible loss, and a heat of mixing based on a charge amount of the battery, and calculate the heating value by summing the reversible loss, the irreversible loss, and the heat of mixing of the battery.

The finite element analysis processor may obtain at least one physical property information among inverse permeability, density, thermal conductivity, specific heat, and viscosity coefficient of each of the plurality of finite elements by using the design variables.

The topology optimization design processor may define an objective function based on a weighted sum of a factor indicating the hydraulic loss and a factor indicating thermal compliance, and update the design variables to maximize a volume of the coolant flowing in the cooling passage within a predefined constraint while minimizing the objective function.

The objective function may further include at least one of a black-and-white penalty factor that applies when the design variables do not converge to a solid or fluid and a temperature penalty factor that applies when a local temperature rise occurs in the battery cooling plate.

The black-and-white penalty factor suppresses the minimization of the objective function when the design variables do not converge to a solid or a fluid, with the penalty strength determined based on the fluid velocity, thermal conductivity, and temperature of the finite element, and the temperature penalty factor suppresses the minimization of the objective function as the temperature of the finite element having the design variables converged to a solid increases, and the penalty strength is determined according to the temperature of the finite element having the design variables converged to the solid.

According to another embodiment of the present disclosure, a topology optimization method for a battery cooling plate, which is performed in a topology optimization device for a battery cooling plate, particularly for optimizing the cooling passage that cools the battery, includes: a heating value calculation step for calculating a heating value of the battery on the basis of a State of Charge (SOC) of the battery; a finite element analysis step for dividing a design area of the battery cooling plate into a plurality of finite elements, allocating design variables to the divided finite elements, and performing finite element analysis on the basis of the heating value and the design variables to obtain finite element analysis information of the finite elements; and a topology optimization step for deriving optimal design variables for the design variables by considering a hydraulic loss of the cooling passage and/or a thermal compliance of the battery cooling plate on the basis of the obtained finite element analysis information, and designing a topology optimized structure of the cooling passage according to the derived optimal design variables.

The heating value calculation step may include calculating a reversible loss, an irreversible loss, and a heat of mixing of the battery based on a charge amount of the battery, and calculating the heating value by summing the reversible loss, the irreversible loss, and the heat of mixing of the battery.

In the finite element analysis step, at least one physical property information among inverse permeability, density, thermal conductivity, specific heat, and viscosity coefficient of each of the plurality of finite elements may be obtained using the design variables.

In the finite element analysis step, the finite element analysis may be performed using the obtained physical property information, and at least one finite element analysis information among a fluid velocity, a fluid pressure, and a temperature of each of the plurality of finite elements may be obtained.

In the topology optimization step, an objective function may be defined based on a weighted sum of the factor indicating the hydraulic loss and the factor indicating the thermal compliance, and the design variables may be updated to maximize the volume of the coolant flowing in the cooling passage within a predefined constraint while minimizing the objective function.

The objective function may further include at least one of a black-and-white penalty factor that applies when the design variables do not converge to a solid or fluid and a temperature penalty factor that applies when a local temperature rise occurs in the battery cooling plate.

The black-and-white penalty factor suppresses the minimization of the objective function when the design variables do not converge to a solid or a fluid, with the penalty strength determined based on calculate a heating value the fluid velocity, thermal conductivity, and temperature of the finite element, and the temperature penalty factor suppresses the minimization of the objective function as the temperature of the finite element having the design variables converged to a solid increases, and the penalty strength is determined according to the temperature of the finite element having the design variables converged to the solid.

According to one aspect of the present disclosure, it is possible to design a battery cooling plate that minimizes hydraulic pressure loss and maximizes cooling performance while satisfying a plurality of design constraints without predefined structural information.

In addition, high-performance characteristics of the battery may be maintained through the battery cooling plate maximizing cooling performance, and charging time of the battery may be shortened.

The effects of the present disclosure are not limited to the above-mentioned effects, and other effects not mentioned will be clearly understood by those skilled in the art from the description of the claims.

### BRIEF DESCRIPTION OF THE DRAWINGS

FIG. 1 is an exemplary diagram of a battery cooling plate.
FIG. 2 is an exemplary diagram for explaining a Design of Experiment(DOE), which is an example of a conventional battery cooling plate design technique.
FIG. 3 is an exemplary diagram for explaining Size and Shape Optimization, which is another example of the conventional battery cooling plate design technique.
FIG. 4 is a block diagram illustrating a schematic configuration of a topology optimization device for a battery cooling plate according to an embodiment of the present disclosure.
FIG. 5 is an exemplary diagram of a profile of an open-circuit voltage and an entropy variation for explaining a SOC of a battery according to another embodiment of the present disclosure.
FIG. 6 is an exemplary diagram for explaining a heating value according to the other embodiment of the present disclosure.
FIG. 7 is an exemplary diagram for explaining a finite element according to the other embodiment of the present disclosure.
FIG. 8 is an exemplary diagram for explaining a design variable according to the other embodiment of the present disclosure.
FIG. 9 is an exemplary diagram for explaining a penalty factor according to the other embodiment of the present disclosure.
FIG. 10 is a flowchart illustrating a schematic flow of a topology optimization method for a battery cooling plate according to the other embodiment of the present disclosure.
FIG. 11 is a diagram illustrating experimental results according to iteration of design variables update according to the other embodiment of the present disclosure.
FIG. 12 is a diagram illustrating experimental results for explaining a topology optimization process according to the other embodiment of the present disclosure.
FIG. 13 is a diagram illustrating experimental results according to a change in a weight of an objective function according to the other embodiment of the present disclosure.
FIG. 14 is a diagram illustrating the results of an experiment while changing the heating value and the flow rate of a battery according to the other embodiment of the present disclosure.
FIG. 15 is a diagram illustrating a result of experimenting with an effect of converging design variables according to a black-and-white penalty factor and a temperature penalty factor according to the other embodiment of the present disclosure.
FIG. 16 is a diagram illustrating a result of experimenting with changes in a design shape, a fluid speed, a pressure, and a temperature of a battery cooling plate according to a black-and-white penalty factor and a temperature penalty factor according to the other embodiment of the present disclosure.
FIG. 17 is an exemplary diagram of a battery cooling plate manufactured according to the other embodiment of the present disclosure.
FIG. 18 is a view illustrating a result of comparing a battery cooling plate manufactured according to an embodiment of the present disclosure with a conventional battery cooling plate.

### DETAILED DESCRIPTION OF THE PREFERRED EMBODIMENT

A detailed description of the present disclosure, which will be described later, refers to the accompanying drawings, which illustrate specific embodiments in which the present disclosure may be practiced as examples. These examples are described in detail to be sufficient for those skilled in the art to practice the present disclosure. It should be understood that the various embodiments of the present disclosure are different from each other but need not be mutually exclusive. For example, certain shapes, structures, and characteristics described herein may be implemented in other embodiments without departing from the spirit and scope of the present disclosure with respect to one embodiment. It should also be understood that the position or arrangement of individual components within each disclosed embodiment may be altered without departing from the spirit and scope of the present disclosure. Accordingly, the detailed description to be described below is not intended to be taken in a limited sense, and the scope of the present disclosure, if properly described, is limited only by the appended claims along with all the scope equivalent to those claimed by the claims. Similar reference numerals in the drawings refer to the same or similar functions across several aspects.

The components according to the present disclosure are components defined by functional classification rather than physical classification, and may be defined by functions performed by each. Each component may be implemented as hardware or a program code and a processing unit that perform each function, and functions of two or more components may be included in one component to be implemented. Accordingly, it should be noted that the names assigned to the components are intended to indicate the representative functions they perform, rather than to imply a physical distinction between them.

Hereinafter, exemplary embodiments of the present disclosure will be described in more detail with reference to the drawings.

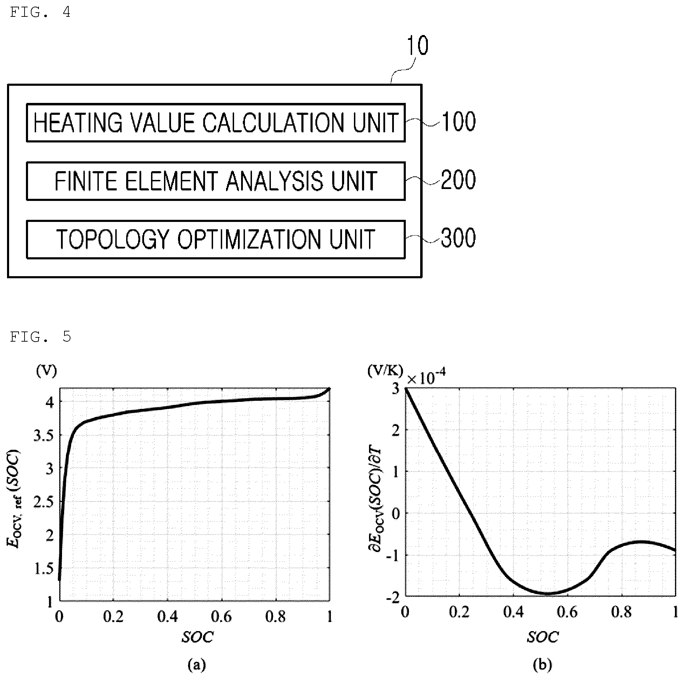

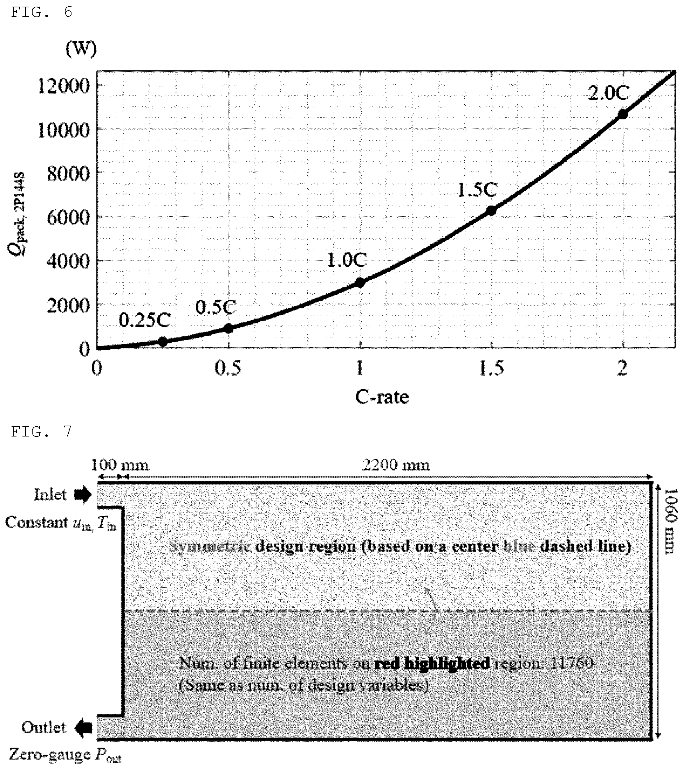

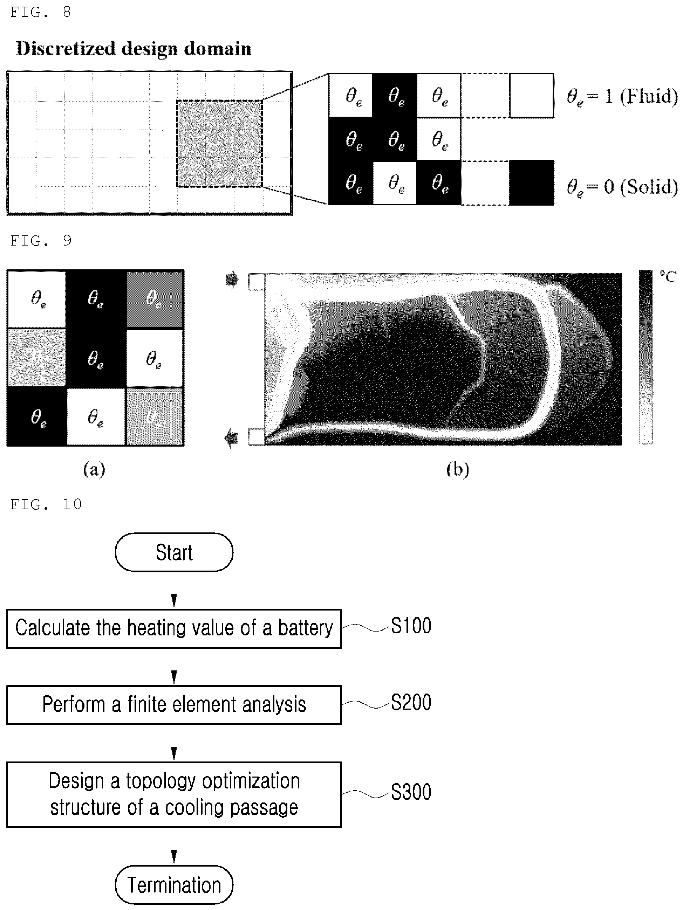

FIG. 1 is an exemplary diagram of a battery cooling plate. FIG. 2 is an exemplary diagram for explaining a Design of Experiment, which is an example of a conventional battery cooling plate design technique. FIG. 3 is an exemplary diagram for explaining Size and Shape Optimization, which is another example of the conventional battery cooling plate design technique. FIG. 4 is a block diagram illustrating a schematic configuration of a device for topology optimization for a battery cooling plate according to an embodiment of the present disclosure. FIG. 5 is an exemplary diagram of a profile of an open-circuit voltage and an entropy variation for explaining a SOC of a battery according to another embodiment of the present disclosure. FIG. 6 is an exemplary diagram for explaining a heating value according to the other embodiment of the present disclosure. FIG. 7 is an exemplary diagram for explaining a finite element according to the other embodiment of the present disclosure. FIG. 8 is an exemplary diagram for explaining design variables according to the other embodiment of the present disclosure. FIG. 9 is an exemplary diagram for explaining a penalty factor according to the other embodiment of the present disclosure.

The device 10 for topology optimization for a battery cooling plate according to an embodiment of the present disclosure may perform topology optimization of the cooling passage of the battery cooling plate that cools the battery. To this end, the device 10 according to an embodiment of the present disclosure may include a heating value calculation unit 100, a finite element analysis unit 200, and a topology optimization unit 300, as shown in FIG. 4. In addition, the device 10 may be executed by installing software (application) for performing the method for topology optimization for a battery cooling plate, and the heating value calculation unit 100, the finite element analysis unit 200, and the topology optimization unit 300 may be controlled by software (application) for performing the method for topology optimization for a battery cooling plate.

In this case, the device 10 may be a separate terminal or some module of the terminal. In addition, the configuration of the heating value calculation unit 100, the finite element analysis unit 200, and the topology optimization unit 300 may be formed as an integrated module or may be formed as one or more modules. However, on the contrary, each configuration may be formed as a separate module.

The device 10 may also be portable or fixed. The device 10 may be in the form of a server or an engine, and may be referred to as other terms such as a device, an appliance, a terminal, a user equipment

(UE), a mobile station (MS), a wireless device, a handheld device, and the like. The device 100 may execute various software applications based on an OS (Operation System), that is, a system. Here, the operating system is a system program for enabling software to use hardware of a device, and may include mobile computer operating systems such as Android OS, iOS, Windows mobile OS, Bada OS, Symbian OS, and BlackBerry OS, and computer operating systems such as Windows, Linux, Unix, MAC, AIX, and HP-UX.

The storage unit (not shown) records a program for performing a method of topology optimization for a battery cooling plate. In addition, data processed by the controller (not shown) may be temporarily or permanently stored, and may include a volatile storage medium or a non-volatile storage medium, but the scope of the present disclosure is not limited thereto.

In addition, the storage unit (not shown) stores data accumulated while performing the method of topology optimization for a battery cooling plate. For example, the storage unit (not shown) may store information on the amount of charge of the battery, design variables, physical property information, finite element analysis information, and the like.

The control unit (not shown) is provided to control the entire process of providing a method for topology optimization for a battery cooling plate.

Hereinafter, the device 10 for topology optimization for a battery cooling plate according to an embodiment of the present disclosure will be described in detail.

First, the heating value calculation unit 100 may calculate a State of Charge (SOC) of the battery.

In the other embodiment of the present disclosure, a battery may mean a battery cell constituting a battery pack. In addition, it may be assumed that the electrode particles constituting the battery cell are the same, and a diffusion equation according to Equation 1 below may be considered in a pseudo one-dimensional model corresponding to the dimension of the electrode particles of the battery cell.$τ \frac{\partial SOC}{\partial t} + ∇ ⋅ \left(-∇SOC\right) = 0$ Equation 1

Here, the Fickian diffusion of the State of Charge (SOC), which is a dimensionless state variable,

X is interpreted in one dimension for a section of length 1, and is a dimensionless spatial variable. In the case of spherical electrode particles, the gradient may be calculated using a spherical coordinate system.

The boundary conditions at the center ( χ=0) of the electrode particle and the surface ( χ=1) of the electrode particle may be expressed by Equations 2 and 3 below, respectively.$∇ SOC \left|{χ = 0}_{}\right. = 0$ Equation 2 $∇ SOC \left|{χ = 0}_{}\right. = \frac{{τI}_{cell}}{3 {C}_{cell}}$ Equation 3

Here, τ is a diffusion time constant (e.g., τ=1000), Ccell is the capacity of the battery, and Icell is the current applied to the battery.

The heating value calculation unit 100 may calculate the average State of Charge (*S̅O̅C̅*) of one electrode particle by integrating the local State of Charge (local SOC) from the center to the surface of the electrode particle according to Equation 4 below. In this case, the local charge amount and the average charge amount of the electrode particles may be used as the local charge amount and the average charge amount of the battery.$\overline{SOC} = 3 {\int }_{0}^{1} {SOCχ}^{2} \partial χ$ Equation 4

The heating value calculation unit 100 may calculate the heating value of the battery based on a State of Charge (SOC) of the battery.

More specifically, the heating value calculation unit 100 may calculate a reversible loss, an irreversible loss, and a heat of mixing of the battery based on the charge amount of the battery.

In the other embodiment of the present disclosure, the heating value calculation unit 100 may calculate the reversible loss Qᵣₑᵥ of the battery according to Equation 5 below.${Q}_{rev} = \left(T\frac{\partial {E}_{OCV} \left(\overline{SOC}, T\right)}{\partial T}\right) {I}_{cell}$ Equation 5

Here, T is the operating temperature of the battery, and E_{ocv} is the open-circuit voltage.

E_{ocv} may be expressed as a function of SOC and temperature as shown in Equation 6 below.${E}_{OCV} \left(SOC, T\right) = {E}_{OCV , ref} \left(SOC\right) + \left(T-{T}_{ref}\right) \frac{\partial {E}_{OCV} \left(SOC\right)}{\partial T}$ Equation 6

Here, T_{ref} is the reference temperature, E_{ocv,ref}(SOC) is the open-circuit voltage at the reference temperature, and ∂ *E* _{OCV}(*SOC*)/∂*T* is the amount of change in entropy of the battery.

The profiles of E_{ocv,ref}(SOC) and ∂ *E* _{OCV}(*SOC*)/∂*T* used in the other embodiment of the present disclosure may be confirmed in FIGS. 5(a) and 5(b).

In the other embodiment of the present disclosure, the heating value calculation unit 100 may calculate the irreversible loss Qᵢᵣᵣₑᵥ of the battery according to Equation 7 below. The irreversible loss is a loss that occurs when the voltage of the battery is out of equilibrium, and may be due to ohmic overpotential, activation overpotential, and concentration overpotential.${Q}_{irrev} = \left({E}_{cell}-{E}_{OCV}\left(\overline{SOC}\right)\right) {I}_{cell}$ Equation 7

Here, Ecell is a battery voltage, and may be expressed as Equation 8 below.${E}_{cell} = {E}_{OCV} \left(\overline{SOC}, T\right) + {η}_{IR} + {η}_{act} + {η}_{conc}$ Equation 8

Here, η_{IR} is an ohmic overpotential, η_{act} is an activation overpotential, and η_{conc} is a concentration overpotential.

The heating value calculation unit 100 may calculate ohmic overpotential according to Equation 9 below. Ohmic overpotential is due to the resistance of the electrode, electrolyte, and separator. ${η}_{IR} = {R}_{ohm} {I}_{cell}$ Equation 9

Here, Rₒₕₘ is an ohmic resistance and may be estimated based on an instantaneous voltage drop at the initial stage of charging and discharging of the battery. In an exemplary embodiment, the ohmic resistance Rₒₕₘ was assumed to be 3mΩ.

The heating value calculation unit 100 may calculate the activation overpotential according to Equation 10 below.${η}_{act} = \frac{2 RT}{F} asinh \frac{{I}_{cell}}{2 {J}_{0} {I}_{1 C}}$ Equation 10

Here, R is a molar gas constant, F is a Faraday constant, J₀ is a dimensionless charge-exchange current (e.g., J₀=1), and a is an activation loss constant.

The heating value calculation unit 100 may calculate the concentration overpotential according to Equation 11 below.${η}_{conc} = {E}_{OCV} \left(SOC\left|{χ = 1}_{}\right.,T\right) - {E}_{OCV} \left(\overline{SOC}, T\right)$ Equation 11

In the other embodiment of the present disclosure, the heating value calculation unit 100 may calculate the heat of mixing (Qᵢᵣᵣₑᵥ) of the battery according to Equation 12 below. The heat of mixing is the potential loss due to the concentration gradient of lithium ions in the electrode particles inside the battery.${Q}_{mix} = \frac{3 {Q}_{cell}}{τ} {\int }_{0}^{1} \frac{\partial {E}_{OCV}}{\partial SOC} {\left(\frac{\partial SOC}{\partial χ}\right)}^{2} {χ}^{2} \partial χ$ Equation 12

In addition, the heating value calculation unit 100 may calculate the heating value Q_{cell} by summing the reversible loss Qᵣₑᵥ, the irreversible loss Qᵢᵣᵣₑᵥ, and the heat of mixing Qₘᵢₓ as shown in Equation 13 below.${Q}_{cell} = {Q}_{rev} + {Q}_{irrev} + {Q}_{mix}$ Equation 13

FIG. 6 is an exemplary diagram showing the heating value of a lithium ion battery (2P144S LIB) pack composed of two parallel and 144 serially according to different C-rate.

The finite element analysis unit 200 may divide the design area of the battery cooling plate into a plurality of finite elements, and allocate design variables to the divided finite elements.

In this case, the design area of the battery cooling plate may be adjusted according to the target EV platform.

In the other embodiment of the present disclosure, as shown in FIG. 7, the finite element analysis unit 200 may configure the design area of the battery cooling plate into two symmetrical areas, by discretizing each area into 11,760 quadrilateral finite elements with a mesh size of 5 mm. In addition, the finite element analysis unit 200 may allocate a design variable(θ=[θ₁,···,θ_{*e*ₘₐₓ}]^{T}) to each of the divided finite elements.

In this case, the design variable(θ) may have a range of 0 to 1, and as illustrated in FIG. 8, when the design variable is 0, the corresponding finite element may be determined as a fluid, and when the design variable is 1, the corresponding finite element may be determined as a solid.

The finite element analysis unit 200 may perform finite element analysis based on the total heating value and design variables.

In the finite element analysis of the other embodiment of the present disclosure, a constant flow rate (uᵢₙ=0.0021 m/s) and a constant external temperature (Tᵢₙ=25°C) of the coolant are defined as the boundary conditions of the inlet, and a zero-gage Pout and a zero heat flux are defined as the boundary conditions of the outlet. In addition, a no-slip boundary condition is provided so that the flow rate of the coolant flowing along the cooling passage does not slide on the wall surface of the cooling passage, and a thermal-insulation condition is provided to the outer wall surrounding the design area of the battery cooling plate.

The finite element analysis unit 200 may obtain finite element analysis information of the finite element by performing the finite element analysis.

More specifically, the finite element analysis unit 200 may obtain material property information of at least one of inverse permeability, density, thermal conductivity, specific heat, and viscosity coefficient of each of the plurality of finite elements by using the design variables.

In the other embodiment of the present disclosure, the finite element analysis unit 200 may obtain the inverse permeability (a(θₑ)), the density (ρ(θₑ)), the thermal conductivity (k(θₑ)), and the specific heat (cₚ(θₑ)) by substituting the design variable (θₑ) into the Darcy interpolation calculation formula according to the following Equation 14.$\begin{matrix}α \left({θ}_{e}\right) = {α}_{f} + \left({α}_{s}-{α}_{f}\right) \frac{{q}_{f} \left(1-{θ}_{e}\right)}{\left({q}_{f}+{θ}_{e}\right)} \\ ρ \left({θ}_{e}\right) = {ρ}_{f} + \left({ρ}_{s}-{ρ}_{f}\right) \frac{{q}_{h} \left(1-{θ}_{e}\right)}{\left({q}_{h}+{θ}_{e}\right)} \\ k \left({θ}_{e}\right) = {k}_{f} + \left({k}_{s}-{k}_{f}\right) \frac{{q}_{h} \left(1-{θ}_{e}\right)}{\left({q}_{h}+{θ}_{e}\right)} \\ {c}_{p} \left({θ}_{e}\right) = {c}_{pf} + \left({c}_{ps}-{c}_{pf}\right) \frac{{q}_{h} \left(1-{θ}_{e}\right)}{\left({q}_{h}+{θ}_{e}\right)} \\ {α}_{s} = \frac{{μ}_{f}}{{D}_{a} {L}_{c}^{2}}\end{matrix}$ Equation 14

Here, α_{f} is the inverse permeability of the fluid, αₛ is the inverse permeability of the solid, ρ_{f} is the density of the fluid, ρₛ is the density of the solid, k_{f} is the thermal conductivity of the fluid, kₛ is the thermal conductivity of the solid, c_{pf} is the specific heat of the fluid, and cₚₛ is the specific heat of the solid. q_{f} and qₕ are the penalty coefficient for converging a design variable to 0 or 1, µ_{f} is a viscosity of a fluid, Dₐ is a Darcy coefficient for defining a ratio of viscous force to porous resistance, and L_{c} is a characteristic coefficient of a cooling passage.

In an exemplary embodiment of the present disclosure, an ethylene glycol aqueous solution having a concentration of 50% was used as a coolant, and aluminum was used as a solid. In addition, as the coefficients of the material property information= α_{f} = 0, ρ_{f} = 1051 kg/m³, ρₛ = 2700 kg/m³, k_{f} = 0.411 W/m/K, kₛ = 237 W/m/K, c_{pf} = 3054 J/kg/K, cₚₛ = 900 J/kg/K, *uf* = 0.00137 Pa·s were used, and it was set to q_{f} = qₕ = 0.001.

In addition, the finite element analysis unit 200 may perform the finite element analysis by using the obtained material property information.

More specifically, the finite element analysis unit 200 may perform finite element analysis for solving the thermofluidic governing equation as shown in Equation 15 below using the material property information. $\begin{matrix}ρ ∇ ⋅ u = 0 \\ - ρ \left(u⋅∇\right) u - ∇ ⋅ \left[-pI+{μ}_{f}\left(∇u+{\left(∇u\right)}^{T}\right)\right] - α \left(θ\right) u = 0 \\ ρ \left(θ\right) {c}_{p} \left(θ\right) u ⋅ ∇ T - ∇ ⋅ \left(k\left(θ\right)∇T\right) + {Q}_{h} = 0\end{matrix}$ Equation 15

Here, ρ is a volumetric density, µ is a dynamic viscosity of the fluid, I is an identity matrix, α is a inverse permeability, cₚ is a specific heat, T is a temperature, k is a thermal conductivity, and Qₕ is a value obtained by dividing the calculated heating value of the battery by the volume of the battery cooling plate, that is, a volumetric heat flux (*W*/*m*³) through the battery cooling plate.

In addition, the finite element analysis unit 200 may obtain at least one finite element analysis information among the fluid velocity u, the fluid pressure p, and the temperature T of each of the plurality of finite elements as a result of the performed finite element analysis.

The topology optimization unit 300 may derive an optimal design variable for the design variables in consideration of the power dissipation of the cooling passage and/or the thermal compliance of the battery cooling plate based on the obtained finite element analysis information.

More specifically, the topology optimization unit 300 may define an objective function based as a weighted sum of hydraulic loss and thermal compliance factors, and update the design variables to maximize the volume of the coolant flowing in the cooling passage within a predefined constraint while minimizing the objective function.

In this case, the hydraulic pressure loss refers to energy lost by viscous resistance, pressure drop, and the like of the coolant flowing from the inlet to the outlet of the cooling passage of the battery cooling plate, and is closely related to the amount of power consumed by the pump to circulate the coolant. Thermal compliance is a value that quantifies the cooling performance in the design area of the battery cooling plate, and the smaller this value, the higher the heat removal efficiency, that is, the cooling performance.

In the other embodiment of the present disclosure, the topology optimization unit 300 may define the objective function (f(θ)) according to Equation 16 below. $\begin{matrix}Find & θ = {\left[{θ}_{1},…,{θ}_{{e}_{max}}\right]}^{T} \\ Minimize & f \left(θ\right) = w \frac{{Φ}_{f} \left(θ\right)}{{Φ}_{h , 0}} + \left(1-w\right) \frac{{Φ}_{h} \left(θ\right)}{{Φ}_{h , 0}} \\ subject to & g \left(θ\right) = \frac{1}{{V}^{∗}} {\sum }_{e = 1}^{{e}_{max}} {θ}_{e} {V}_{e} - 1 \leq 0\end{matrix}$ Equation 16

Here, eₘₐₓ is the total number of finite elements, and w is a weight coefficient between 0 and 1. Φ_{f} is a factor representing hydraulic loss, Φₕ is a factor representing thermal compliance, and Φ_{f} and Φₕ are normalized by dividing the initial values Φ_{f,0} and Φ_{h,0}, respectively. g(θ) is a constraint on the volume of the coolant, where Vₑ is the volume of the e-th finite element, and V* is the maximum volume of the coolant that the battery cooling plate can accommodate.

Further details of the objective function defined in Equation 16 are as follows.

The factor Φ_{f} indicating hydraulic pressure loss may be expressed by Equation 17 below based on viscous dissipation compliance and inverse permeability compliance.${Φ}_{f} \left(θ\right) = {\int }_{Ω} {{\left(\frac{1}{2}{μ}_{f}{\sum }_{i , j}^{2} {\left(\frac{\partial {u}_{i , e} \left(θ\right)}{\partial {x}_{j}}+\frac{\partial {u}_{j , e} \left(θ\right)}{\partial {x}_{i}}\right)}^{2}\right.}_{︸}}_{viscous dissipation compliance} + {{\left({α}_{e}\left(θ\right){\sum }_{i}^{2} {u}_{i , e}^{2} \left(θ\right)\right)}_{︸}}_{inverse permeability compliance} d Ω$ Equation 17

Here, xᵢ and xⱼ are unit vectors in the x and y directions in the global coordinate system x-y, respectively, u_{i,e} and u_{j,e} are fluid velocities in the x and y directions in the e-th finite element, respectively. Also, the Ω is a design area.

The factor Φₕ indicating the thermal compliance may be expressed by Equation 18 below based on the conduction compliance and the convection compliance.${Φ}_{h} \left(θ\right) = {\int }_{Ω} {{\left({k}_{e}\left(θ\right)\right. {\left(∇{T}_{e}\left(θ\right)\right)}^{2}}_{︸}}_{conduction compliance} + {{\left.{ρ}_{f}{c}_{p}{T}_{e}\left(θ\right)\left({u}_{e}\left(θ\right)⋅∇{T}_{e}\left(θ\right)\right)\right)}_{︸}}_{convection compliance} d Ω$ Equation 18

Here, Tₑ is the temperature of the e-th finite element, and uₑ is the fluid velocity.

The topology optimization unit 300 may calculate the objective function as described above using the material property information.

In addition, the topology optimization unit 300 may update the design variables to minimize the objective function subject to the given constraints according to a preset optimization algorithm.

In the other embodiment of the present disclosure, the topology optimization unit 300 may update the design variables using the Method of Moving Asymptotes (MMA) algorithm. However, the present disclosure is not limited thereto, and various optimization algorithms capable of updating design variables such as a globally convergent MMA (GCMMA) algorithm, an optimality criteria method (OC) algorithm, and the like may be used.

In addition, the topology optimization unit 300 may iterate the update of the design variables until the objective function converges.

Meanwhile, the objective function may further include at least one of a black-and-white penalty factor when the design variables do not converge to a solid or fluid and a temperature penalty factor when a local temperature rise occurs in the battery cooling plate.

More specifically, as shown in FIG. 9A, the black-and-white penalty factor may be applied when the design variables do not converge to a solid or fluid (gray), and may suppress the objective function from being minimized.

In this case, the black-and-white penalty factor may have a penalty intensity determined based on the fluid velocity, thermal conductivity, and temperature of the finite element.

In the other embodiment of the present disclosure, the black-and-white penalty factor is composed of a fluid black-and-white penalty factor ψ_{f}(θ) and a thermal black-and-white penalty factor ψₕ(θ), and the fluid black-and-white penalty factor and the thermal black-and-white penalty factor may be represented by Equations 19 and 20, respectively.${Ψ}_{f} \left(θ\right) = {\int }_{Ω} {{{θ}_{e} \left(1-{θ}_{e}\right)}_{︸}}_{activation term} + {{{α}_{e} \left(θ\right) \sqrt{{\sum }_{i}^{2} \left.\left.{\hat{u}}_{i , e}^{2}\left(θ\right)\right)\right)}}_{︸}}_{intensity term} d Ω$ Equation 19

Here, *û_{i,e}* is the normalized fluid velocity, and is ${\hat{u}}_{i , e} = \frac{{u}_{i , e}}{{u}_{in}} . {θ}_{e} \left(1-{θ}_{e}\right)$ determines the activation of the fluid black-and-white penalty factor. For example, when the finite element is solid (θₑ =0) or fluid (θₑ =1), the fluid black-and-white penalty factor converges to zero and is not activated. The intensity of the penalty of the fluid black-and-white penalty factor is determined by the inverse permeability (αₑ) and the fluid velocity.${Ψ}_{h} \left(θ\right) = {\int }_{Ω} {{{θ}_{e} \left(1-{θ}_{e}\right)}_{︸}}_{activation term} + {{{\left(\left.{k}_{e}\left(θ\right)∇{\hat{T}}_{e}\left(θ\right)\right)\right)}^{2}}_{︸}}_{intensity term} d Ω$ Equation 20

Here, *T̂ₑ*(*θ*) is the normalized temperature defined by ${\hat{T}}_{e} \left(θ\right) = \frac{{T}_{e} \left(θ\right) - {T}_{ref}}{Δ {T}_{max}}$. The intensity of the thermal black-and-white penalty factor is determined by the gradient of the thermal conductivity (kₑ) and the normalized temperature.

As shown in FIG. 9B, the temperature penalty factor may be applied when a local temperature rise occurs due to an uneven temperature distribution in the battery cooling plate, and the higher the temperature of a finite element having a design variable converged to a solid, the more the objective function may be suppressed.

In this case, the temperature penalty factor may be determined according to the temperature of a finite element having a design variable converged to the solid.

In the other embodiment of the present disclosure, the thermal penalty factor Λₙ(θ) may be represented by Equation 21 below. ${Λ}_{h} \left(θ\right) = {\int }_{Ω} \left({{\left(1-{θ}_{e}\right)}_{︸}}_{activation term}+{{\frac{1 + {q}_{h}}{1 - θ + {q}_{h}}}_{︸}}_{intensity term}{Q}_{h}{\hat{T}}^{p}\right) d Ω$ Equation 21

Here, p is a penalty coefficient, and a high penalty coefficient (e.g., p≥3) may be effective in local high temperature suppression, but may cause numerical instability in finite element analysis. In the other embodiment of the present disclosure, p=2 was applied. (1-θₑ) allows the temperature penalty factor to be activated when the finite element is solid (θₑ=0), and not when the finite element is fluid (θₑ=1). The intensity term of the temperature penalty factor is determined by the heat flux and the normalized temperature. A more uniform temperature distribution can be achieved by directly suppressing the high temperature of the solid finite element by applying such a temperature penalty factor.

The objective function including both the black-and-white penalty factor and the temperature penalty factor according to the other embodiment of the present disclosure may be defined as in Equation 22 below, and in this case, the factors representing the hydraulic loss and the factors representing the thermal compliance constituting the objective function may be represented by Equations 23 and 24, respectively.$Minimize \begin{matrix}Find θ = {\left[{θ}_{1},…,{θ}_{{e}_{max}}\right]}^{T} \\ f \left(θ\right) = w \frac{{\hat{Φ}}_{f} \left(θ\right) + {Ψ}_{f} \left(θ\right)}{{\hat{Φ}}_{f , 0}} + \left(1-w\right) \frac{{\hat{Φ}}_{h} \left(θ\right) + {Ψ}_{h} \left(θ\right) + {Λ}_{h} \left(θ\right)}{{\hat{Φ}}_{h , 0} + {Λ}_{h , 0}} \\ subject to g \left(θ\right) = \frac{1}{V *} {\sum }_{e = 1}^{{e}_{max}} {θ}_{e} {V}_{e} - 1 \leq 0\end{matrix}$ Equation 22 ${\hat{Φ}}_{f} \left(θ\right) = {\int }_{Ω} \left(\frac{1}{2}μ{\sum }_{i , j} {\left(\frac{\partial {\hat{u}}_{i , e} \left(θ\right)}{\partial {x}_{j}}+\frac{\partial {\hat{u}}_{j , e} \left(θ\right)}{\partial {x}_{i}}\right)}^{2} + {α}_{e} \left(θ\right) {\sum }_{i} {\hat{u}}_{i , e}^{2} \left(θ\right)\right) d Ω$ Equation 23 ${\hat{Φ}}_{h} \left(θ\right) = {\int }_{Ω} \left({k}_{e}\left(θ\right){\left(∇{\hat{T}}_{e}\left(θ\right)\right)}^{2}+{ρ}_{f}{c}_{p}{\hat{T}}_{e}\left(θ\right)\left({\hat{u}}_{e}\left(θ\right)⋅∇{\hat{T}}_{e}\left(θ\right)\right)\right) d Ω$ Equation 24

Here, Φ̂*_{f}* and Φ̂*ₕ* are normalized hydraulic loss and normalized thermal compliance, respectively, Φ̂_{*f,*0} and Φ̂_{*h*,0} are initial values of hydraulic loss and thermal compliance for normalization, respectively. *û_{i,e}* is the normalized fluid velocity, and is ${\hat{u}}_{i , e} = \frac{{u}_{i , e}}{{u}_{in}}$.

The topology optimization unit 300 may design a topology optimized structure of the cooling passage according to the derived optimal design variables.

FIG. 10 is a flowchart illustrating a method of topology optimization for a battery cooling plate according to the other embodiment of the present disclosure, and since the method for topology optimization for a battery cooling plate according to the other embodiment of the present disclosure is performed based on substantially the same configuration as the device 10 for topology optimization for a battery cooling plate illustrated in FIG. 4, the same reference numerals are assigned to the same components as the device 10 for topology optimization for a battery cooling plate illustrated in FIG. 4, and repeated descriptions thereof will be omitted for brevity.

According to the other embodiment of the present disclosure, a topology optimization method for a battery cooling plate may include: heating value calculation step S100 for calculating a heating value of the battery on the basis of a State of Charge (SOC) of the battery; a finite element analysis step S200 for allocating a design variable to the divided finite element, analyzing the finite element based on the heating value and the design variables to obtain finite element analysis information of the finite element; and a topology optimization step S300 for deriving an optimal design variable for the design variables in consideration of a hydraulic loss of the cooling passage and/or a thermal compliance of the battery cooling plate on the basis of the obtained finite element analysis information, and designing a topology optimized structure of the cooling passage according to the derived optimal design variable.

In the heating value calculation step S100, a reversible loss, an irreversible loss, and a heat of mixing of the battery may be calculated based on the charge amount of the battery, and the heating value may be calculated by summing the reversible loss, the irreversible loss, and mixing heat of the battery.

In the finite element analysis step S200, at least one type of material property information among inverse permeability, density, thermal conductivity, specific heat, and viscosity coefficients of each of the plurality of finite elements may be obtained by using the design variables.

In the finite element analysis step S200, the finite element analysis may be performed using the obtained physical property information, and at least one finite element analysis information of fluid velocity, fluid pressure, and temperature of each of the plurality of finite elements may be obtained.

In the topology optimization step S300, an objective function may be defined based on a weighted sum of the factor indicating the hydraulic loss and the factor indicating thermal compliance, and the design variables may be updated to maximize the volume of the coolant flowing in the cooling passage within a predefined constraint while minimizing the objective function.

The objective function may further include at least one of a black-and-white penalty factor when the design variables do not converge to a solid or fluid and a temperature penalty factor when a local temperature rise occurs in the battery cooling plate.

The black-and-white penalty factor suppresses the minimization of the objective function when the design variables do not converge to a solid or a fluid, and the penalty strength is determined according to the fluid velocity, thermal conductivity, and temperature of the finite element, and the temperature penalty factor suppresses the minimization of the objective function as the temperature of the finite element having the design variables converged to a solid increases, and the penalty strength is determined according to the temperature of the finite element having the design variables converged to the solid.

The topology optimization method for a battery cooling plate according to the present disclosure may be implemented in the form of program instructions that may be executed through various computer components and recorded in a computer-readable recording medium. The computer-readable recording medium may include program instructions, data files, data structures, and the like alone or in combination.

The program instructions recorded in the computer-readable recording medium may be specially designed and configured for the present disclosure or may be known to and used by those skilled in the field of computer software.

Examples of the computer-readable recording medium include a magnetic medium such as a hard disk, a floppy disk, and a magnetic tape, an optical recording medium such as a CD-ROM and a DVD, a magneto-optical medium such as a floptical disk, and a hardware device specially configured to store and execute program instructions such as a ROM, a RAM, a flash memory, and the like.

Examples of program instructions include not only machine language codes such as those generated by a compiler, but also high-level language codes that may be executed by a computer using an interpreter or the like. The hardware device may be configured to operate as one or more software modules to perform processing according to the present disclosure, and vice versa.

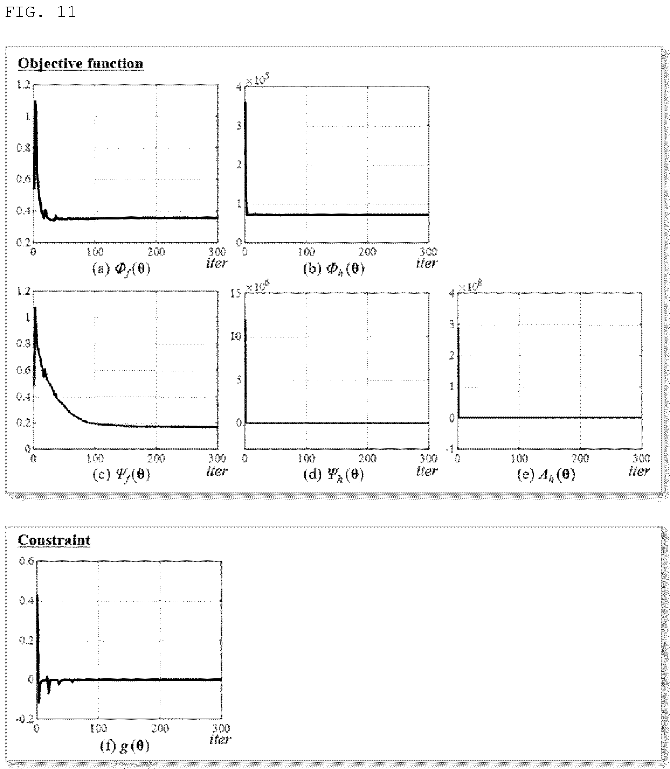

Hereinafter, experimental result of evaluating the performance of the topology optimization according to the other embodiment of the present disclosure will be described with reference to FIGS. 11 to 18.

Referring to FIG. 11, an experimental result according to iteration of updating design variables in the topology optimization according to the other embodiment of the present disclosure may be confirmed. w = 0.5, C-rate = 1.0C, and the flow rate was 10LPM. As shown in FIGS. 11(a) and 11(b), it is possible to check the change history of the objective function and the constraint from the initial design (iterated 0 times) to the optimal design (iterated 300 times), and it is demonstrated that the topology optimization of the present disclosure can successfully minimize the objective function while satisfying the constraint of the volume of cooling water. In particular, as shown in FIG. 11F, g(Θ)≤0 means that the constraint is satisfied. Further, FIGS. 11(a) and 11(b) show that the topology optimization of the present disclosure repeatedly effectively minimizes hydraulic pressure loss and thermal compliance, respectively, and FIGS. 11(c), 11(d), and 11(e) show optimization histories of fluid black-and-white penalty factors, thermal black-and-white penalty factors, and temperature penalty factors.

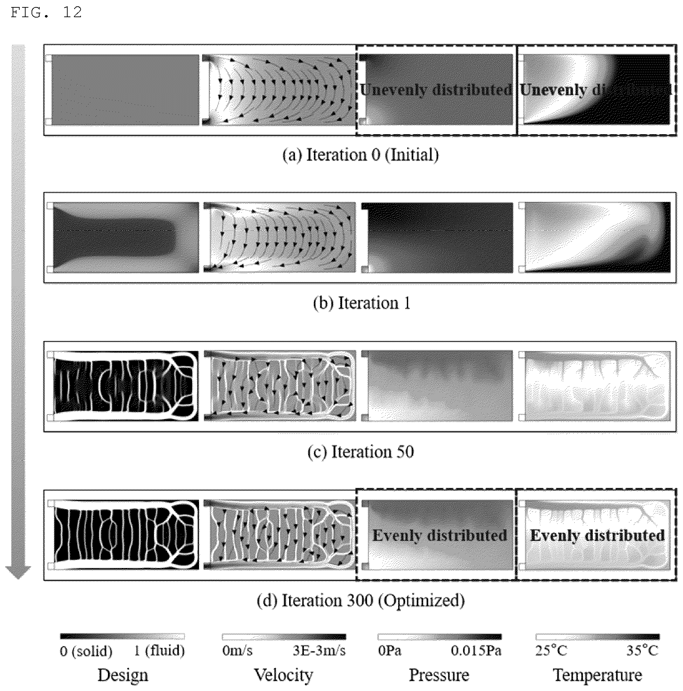

FIG. 12 shows changes in the design shape, fluid velocity, pressure, and temperature distribution of the battery cooling plate during the topology optimization process according to the other embodiment of the present disclosure. The initial design variable was set to θe=0.5.

When the dotted line boxes shown in FIGS. 12(a) and 12(d) are checked, it may be confirmed that the pressure and temperature are relatively uniformly distributed in the optimal design (300 iterations) compared to the initial design. This uniform pressure and temperature distribution can contribute to significantly reducing hydraulic pressure loss and thermal compliance.

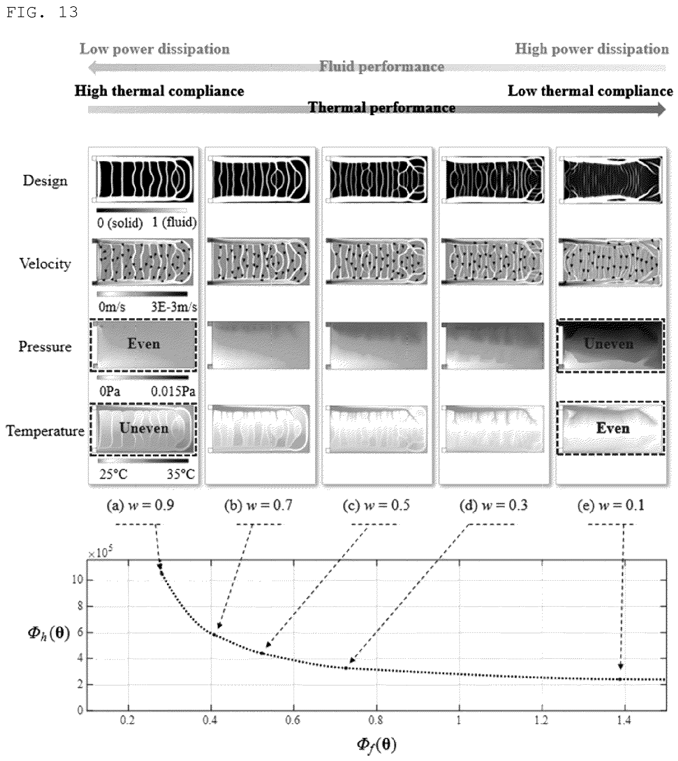

FIG. 13 is an experimental result of changing the weight w of a factor indicating hydraulic loss of an objective function and a factor indicating thermal compliance.

As shown in FIG. 13(a), in the case of w=0.9, since the weight for hydraulic loss is greater than the thermal compliance, it may be confirmed that the result of the topology optimization has a relatively low hydraulic loss and a high temperature distribution. Meanwhile, as shown in FIG. 13E, in the case of w=0.1, since the weight for the thermal compliance is greater than the hydraulic loss, it may be confirmed that the result of the topology optimization has a relatively high hydraulic loss and a low temperature distribution.

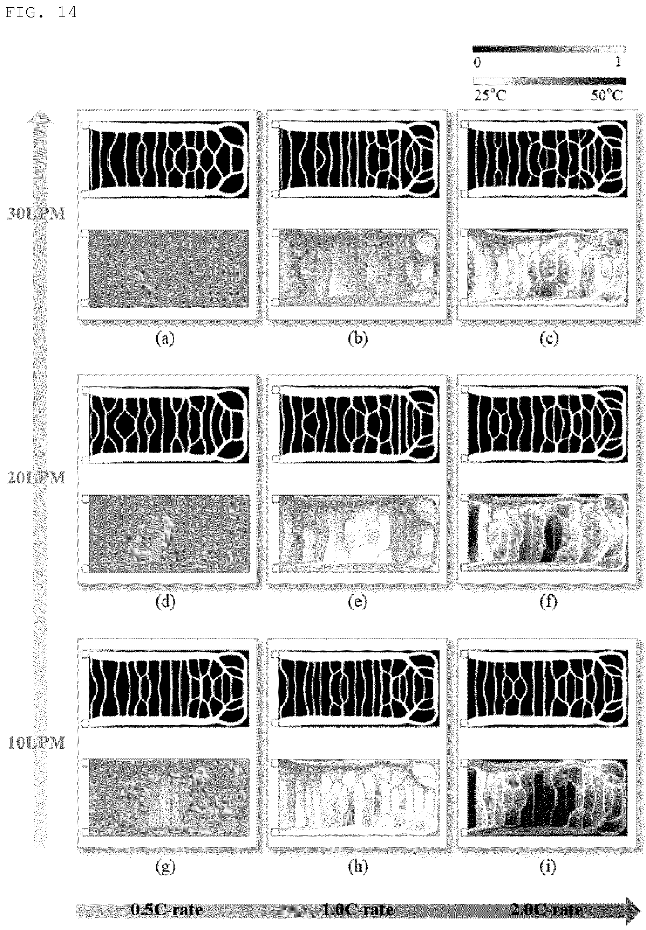

FIG. 14 shows a design shape and temperature distribution of a topology optimized battery cooling plate according to the other embodiment of the present disclosure when different heating values (1C-rate, 2C-rate, and 3C-rate) and flow rates (10 liter per minute, 20 liter per minute, 30 liter per minute) are applied. It can be seen that as the C-rate increases, it has a high temperature distribution, and as the flow rate increases, it has a low temperature distribution.

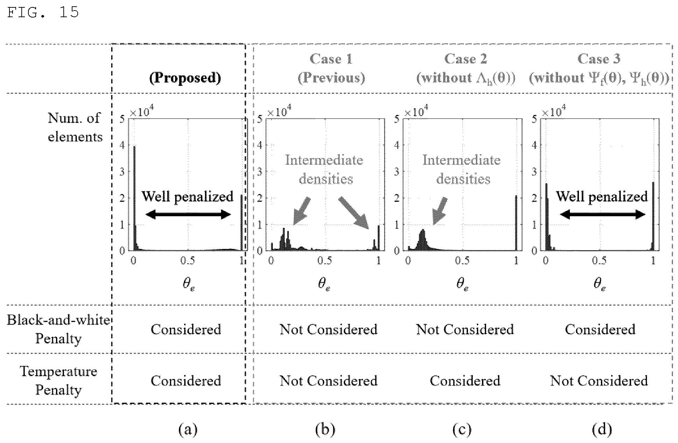

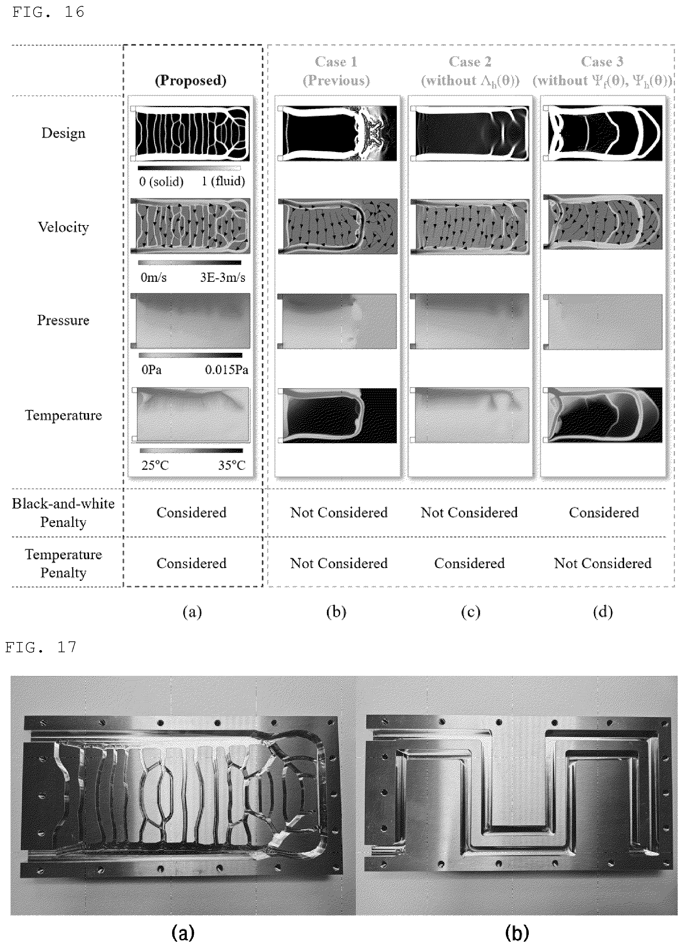

FIGS. 15 and 16 are results of experimenting with effects of black-and-white penalty factors and temperature penalty factors according to the other embodiment of the present disclosure.

In the proposed case, the objective function includes both a black-and-white penalty factor and a temperature penalty factor, Case 1 is a case where the objective function does not include both a black-and-white penalty factor and a temperature penalty factor, Case 2 is a case where the objective function includes only a black-and-white penalty factor, and Case 3 is a case where only the temperature penalty factor is included.

As shown in FIG. 15, when Proposed and Case 3 are compared, it can be confirmed that the design variable converges to 0 or 1 better by including the black-and-white penalty factor in the objective function. In addition, as shown in FIG. 16, when Proposed and Case 2 are compared, when a local temperature rise occurs, it may be confirmed that the temperature rise is low by including a temperature penalty factor in the objective function.

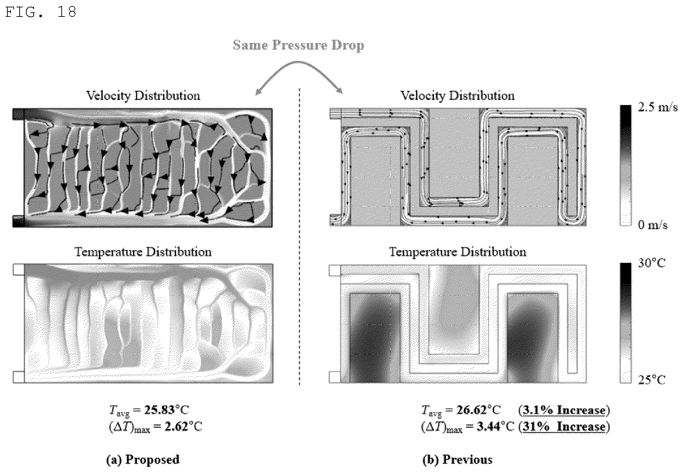

FIGS. 17 and 18 show results of manufacturing a prototype of a topology optimized battery cooling plate according to the other embodiment of the present disclosure, and comparing its performance with a battery cooling plate for an existing electric vehicle.

FIG. 17(a) is a battery cooling plate manufactured according to an embodiment of the present disclosure, and FIG. 17(b) is a conventional battery cooling plate for an electric vehicle. Referring to FIG. 18, it can be seen that the battery cooling plate manufactured according to an embodiment of the present disclosure exhibits characteristics of low hydraulic pressure loss (fast flow rate) and low temperature distribution compared to the existing battery cooling plate.

Although various embodiments of the present disclosure have been illustrated and described above, the present disclosure is not limited to the specific embodiments described above, and various modifications can be made by a person skilled in the art to which the present disclosure belongs without departing from the gist of the present disclosure claimed in the claims, and such modifications should not be construed as departing from the technical spirit or scope of the present disclosure.

### DESCRIPTION OF SYMBOLS

10: Device for topology optimization for a battery cooling plate
100: Heating value calculation processor
200: Finite element analysis processor
300: Topology optimization design processor

## Claims

1. A topology optimization device for a battery cooling plate configured to design a topology optimized structure of a cooling passage of the battery cooling plate that cools a battery, the topology optimization device comprising:
a heating value calculation processor configured to calculate a heating value of the battery based on a State of Charge, SOC, of the battery;
a finite element analysis processor configured to divide a design area of the battery cooling plate into a plurality of finite elements, allocate design variables to the plurality of finite elements, and perform finite element analysis based on the heating value and the design variables to obtain finite element analysis information of the plurality of finite elements; and
a topology optimization design processor configured to derive optimal design variables for the design variables by considering a hydraulic loss of the cooling passage or a thermal compliance of the battery cooling plate based on the obtained finite element analysis information, and to design the topology optimized structure of the cooling passage according to the derived optimal design variables.

2. The topology optimization device for the battery cooling plate of claim 1, wherein the heating value calculation processor is configured to:
calculate a reversible loss, an irreversible loss, and a heat of mixing based on a charge amount of the battery, and
calculate the heating value by summing the reversible loss, the irreversible loss, and the heat of mixing based on the charge amount of the battery.

3. The topology optimization device for the battery cooling plate of claim 1 or 2, wherein the finite element analysis processor is configured to obtain at least one physical property information among inverse permeability, density, thermal conductivity, specific heat, and viscosity coefficient for each of the plurality of finite elements using the design variables.

4. The topology optimization device for the battery cooling plate of claim 3, wherein the finite element analysis processor is configured to perform the finite element analysis using the obtained at least one physical property information, and obtain at least one finite element analysis information among fluid velocity, fluid pressure, and temperature for each of the plurality of finite elements.

5. The topology optimization device for the battery cooling plate of any one of claims 1 to 4, wherein the topology optimization design processor is configured to:
define an objective function based on a weighted sum of a first factor indicating the hydraulic loss and a second factor indicating thermal compliance, and
update the design variables to minimize the objective function while maximizing a volume of a coolant flowing through the cooling passage within a predefined constraint condition.

6. The topology optimization device for the battery cooling plate of claim 5, wherein the objective function further comprises at least one of:
a black-and-white penalty factor that applies when the design variables do not converge to a solid or a fluid, and
a temperature penalty factor that applies when a local temperature rise occurs in the battery cooling plate.

7. The topology optimization device for the battery cooling plate of claim 6,
wherein the black-and-white penalty factor suppresses a minimization of the objective function when the design variables do not converge to the solid or the fluid,
wherein a penalty strength is determined according to fluid velocity, thermal conductivity, and temperature of a finite element, and
wherein the temperature penalty factor suppresses the minimization of the objective function as the temperature of the finite element having the design variables converged to the solid increases, and the penalty strength is determined according to the temperature of the finite element having the design variables converged to the solid.

8. A topology optimization method for a battery cooling plate, which is performed in a topology optimization device for the battery cooling plate configured to design a topology optimized structure of a cooling passage of the battery cooling plate that cools a battery, the topology optimization method comprising:
calculating a heating value of the battery based on a State of Charge, SOC, of the battery;
performing a finite element analysis including:
dividing a design area of the battery cooling plate into a plurality of finite elements,
allocating design variables to the plurality of finite elements, and
performing the finite element analysis based on the heating value and the design variables to obtain finite element analysis information of the finite elements; and
designing a topology optimization including:
deriving an optimal design variable for the design variables by considering a hydraulic loss of the cooling passage or a thermal compliance of the battery cooling plate based on the obtained finite element analysis information, and
designing the topology optimized structure of the cooling passage according to the derived optimal design variable.

9. The topology optimization method for the battery cooling plate of claim 8, wherein in the calculating the heating value, each of a reversible loss, an irreversible loss, and a heat of mixing of the battery is calculated based on a charge amount of the battery, and the heating value is calculated by summing the reversible loss, the irreversible loss, and the heat of mixing of the battery.

10. The topology optimization method for the battery cooling plate of claim 8 or 9, wherein in the performing the finite element analysis, at least one physical property information among inverse permeability, density, thermal conductivity, specific heat, and viscosity coefficients for each of the plurality of finite elements is obtained by using the design variables.

11. The topology optimization method for the battery cooling plate of claim 10, wherein the finite element analysis is performed using the obtained physical property information, and at least one finite element analysis information among a fluid velocity, a fluid pressure, and a temperature for each of the plurality of finite elements is obtained.

12. The topology optimization method for the battery cooling plate of any one of claims 8 to 11, wherein in the designing the topology optimization, an objective function is defined based on a weighted sum of a first factor indicating the hydraulic loss and a second factor indicating thermal compliance, and the design variables are updated to minimize the objective function while maximizing a volume of a coolant flowing through the cooling passage within a predefined constraint.

13. The topology optimization method for the battery cooling plate of claim 12, wherein the objective function further comprises at least one of:
a black-and-white penalty factor that applies when the design variables do not converge to a solid or a fluid, and
a temperature penalty factor that applies when a local temperature rise occurs in the battery cooling plate.

14. The topology optimization method for the battery cooling plate of claim 13,
wherein the black-and-white penalty factor suppresses a minimization of the objective function when the design variables do not converge to the solid or the fluid,
wherein a penalty strength is determined according to fluid velocity, thermal conductivity, and temperature of a finite element, and
wherein the temperature penalty factor suppresses the minimization of the objective function as the temperature of the finite element having the design variables converged to the solid increases, and the penalty strength is determined according to the temperature of the finite element having the design variables converged to the solid.

15. A recording medium having recorded thereon a computer program for implementing a topology optimization method for a battery cooling plate, wherein the topology optimization method comprises:
calculating a heating value of a battery based on a State of Charge, SOC, of the battery;
performing a finite element analysis including:
dividing a design area of the battery cooling plate into a plurality of finite elements,
allocating design variables to the plurality of finite elements, and
performing the finite element analysis based on the heating value and the design variables to obtain finite element analysis information of the plurality of finite elements; and designing topology optimization including:
deriving an optimal design variable for the design variables by considering a hydraulic loss of a cooling passage or a thermal compliance of the battery cooling plate based on the obtained finite element analysis information, and
designing a topology optimized structure of the cooling passage according to the derived optimal design variable.

## Amended claims

### Amended claims in accordance with Rule 137(2) EPC.

1. A topology optimization device for a battery cooling plate configured to design a topology optimized structure of a cooling passage of the battery cooling plate that cools a battery, the topology optimization device comprising:
a heating value calculation processor configured to calculate a heating value of the battery based on a State of Charge, SOC, of the battery;
a finite element analysis processor configured to divide a design area of the battery cooling plate into a plurality of finite elements, allocate design variables to the plurality of finite elements, and perform finite element analysis based on the heating value and the design variables to obtain finite element analysis information of the plurality of finite elements; and
a topology optimization design processor configured to derive optimal design variables for the design variables by considering a hydraulic loss of the cooling passage or a thermal compliance of the battery cooling plate based on the obtained finite element analysis information, and to design the topology optimized structure of the cooling passage according to the derived optimal design variables,
wherein the finite element analysis processor is configured to obtain physical property information of inverse permeability, density, thermal conductivity, and specific heat capacity for each of the plurality of finite elements using the design variables.

2. The topology optimization device for the battery cooling plate of claim 1, wherein the heating value calculation processor is configured to:
calculate a reversible loss, an irreversible loss, and a heat of mixing based on a charge amount of the battery, and
calculate the heating value by summing the reversible loss, the irreversible loss, and the heat of mixing based on the charge amount of the battery.

3. The topology optimization device for the battery cooling plate of claim 1 or 2, wherein the finite element analysis processor is configured to perform the finite element analysis using the obtained at least one physical property information, and obtain at least one finite element analysis information among fluid velocity, fluid pressure, and temperature for each of the plurality of finite elements.

4. The topology optimization device for the battery cooling plate of any one of claims 1 to 3, wherein the topology optimization design processor is configured to:
define an objective function based on a weighted sum of a first factor indicating the hydraulic loss and a second factor indicating thermal compliance, and
update the design variables to minimize the objective function while maximizing a volume of a coolant flowing through the cooling passage within a predefined constraint condition.

5. The topology optimization device for the battery cooling plate of claim 4, wherein the objective function further comprises at least one of:
a black-and-white penalty factor that applies when the design variables do not converge to a solid or a fluid, and
a temperature penalty factor that applies when a local temperature rise occurs in the battery cooling plate.

6. The topology optimization device for the battery cooling plate of claim 5, wherein the black-and-white penalty factor suppresses a minimization of the objective function when the design variables do not converge to the solid or the fluid,
wherein a penalty strength is determined according to fluid velocity, thermal conductivity, and temperature of a finite element, and
wherein the temperature penalty factor suppresses the minimization of the objective function as the temperature of the finite element having the design variables converged to the solid increases, and the penalty strength is determined according to the temperature of the finite element having the design variables converged to the solid.

7. A topology optimization method for a battery cooling plate, which is performed in a topology optimization device for the battery cooling plate configured to design a topology optimized structure of a cooling passage of the battery cooling plate that cools a battery, the topology optimization method comprising:
calculating a heating value of the battery based on a State of Charge, SOC, of the battery;
performing a finite element analysis including:
dividing a design area of the battery cooling plate into a plurality of finite elements,
allocating design variables to the plurality of finite elements, and
performing the finite element analysis based on the heating value and the design variables to obtain finite element analysis information of the finite elements; and
designing a topology optimization including:
deriving an optimal design variable for the design variables by considering a hydraulic loss of the cooling passage or a thermal compliance of the battery cooling plate based on the obtained finite element analysis information, and
designing the topology optimized structure of the cooling passage according to the derived optimal design variable,
wherein in the performing the finite element analysis, physical property information of inverse permeability, density, thermal conductivity, and specific heat capacity for each of the plurality of finite elements is obtained by using the design variables.

8. The topology optimization method for the battery cooling plate of claim 7, wherein in the calculating the heating value, each of a reversible loss, an irreversible loss, and a heat of mixing of the battery is calculated based on a charge amount of the battery, and the heating value is calculated by summing the reversible loss, the irreversible loss, and the heat of mixing of the battery.

9. The topology optimization method for the battery cooling plate of claim 7 or 8, wherein the finite element analysis is performed using the obtained physical property information, and at least one finite element analysis information among a fluid velocity, a fluid pressure, and a temperature for each of the plurality of finite elements is obtained.

10. The topology optimization method for the battery cooling plate of any one of claims 7 to 9, wherein in the designing the topology optimization, an objective function is defined based on a weighted sum of a first factor indicating the hydraulic loss and a second factor indicating thermal compliance, and the design variables are updated to minimize the objective function while maximizing a volume of a coolant flowing through the cooling passage within a predefined constraint.

11. The topology optimization method for the battery cooling plate of claim 10, wherein the objective function further comprises at least one of:
a black-and-white penalty factor that applies when the design variables do not converge to a solid or a fluid, and
a temperature penalty factor that applies when a local temperature rise occurs in the battery cooling plate.

12. The topology optimization method for the battery cooling plate of claim 11, wherein the black-and-white penalty factor suppresses a minimization of the objective function when the design variables do not converge to the solid or the fluid,
wherein a penalty strength is determined according to fluid velocity, thermal conductivity, and temperature of a finite element, and
wherein the temperature penalty factor suppresses the minimization of the objective function as the temperature of the finite element having the design variables converged to the solid increases, and the penalty strength is determined according to the temperature of the finite element having the design variables converged to the solid.

13. A recording medium having recorded thereon a computer program for implementing a topology optimization method for a battery cooling plate, wherein the topology optimization method comprises:
calculating a heating value of a battery based on a State of Charge, SOC, of the battery;
performing a finite element analysis including:
dividing a design area of the battery cooling plate into a plurality of finite elements,
allocating design variables to the plurality of finite elements, and
performing the finite element analysis based on the heating value and the design variables to obtain finite element analysis information of the plurality of finite elements; and
designing topology optimization including:
deriving an optimal design variable for the design variables by considering a hydraulic loss of a cooling passage or a thermal compliance of the battery cooling plate based on the obtained finite element analysis information, and
designing a topology optimized structure of the cooling passage according to the derived optimal design variable,
wherein in the performing the finite element analysis, physical property information of inverse permeability, density, thermal conductivity, and specific heat capacity for each of the plurality of finite elements is obtained by using the design variables.
